# EUROPEAN PATENT APPLICATION

(11) **EP 2 311 602 A1**
(43) Date of publication of application: **20.04.2011**
(21) Application number: 10180294.0
(22) Date of filing: 27.09.2010
(51) Int. Cl.: B24B 3/36, B24B 41/00, B23Q 7/10, B23Q 7/02

(54) **Cutting blade sharpening device**

(30) Priority: 19.10.2009 NL 2003670
(71) Applicant: Benedict Technische Handelsonderneming, 7274 EG Geesteren (NL)
(72) Inventor: Benedict, Andreas Pál, 7274 EG Geesteren (NL)
(74) Representative: de Lange, Hendrik Cornelis

(57) **Abstract**

Device (1) suitable for sharpening cutting blades (5), for instance cutting blades for agricultural machines, comprising: a first receiving cassette (2) for receiving cutting blades (5) for sharpening, a second receiving cassette (3) for receiving sharpened cutting blades (8), a conveyor (4) with receiving element, a sharpening mechanism (7), wherein the conveyor is adapted to receive a cutting blade (5) for sharpening from the first cassette (2), to place the cutting blade (5) for sharpening in a sharpening position in which the cutting blade for sharpening (5) can be sharpened by the sharpening mechanism (7), and to place the sharpened cutting blade (8) in the second receiving cassette (3).

## Description

The invention relates to a cutting blade sharpening device. The invention relates more particularly to a cutting blade sharpening device for fully automatic sharpening of cutting blades used in agricultural machines. These cutting blades are generally arranged in agricultural machines with for instance the purpose of cutting, reducing in size and/or chopping grass, hay, straw and/or silage. Such cutting blades are specifically applied in machines such as forage harvesters, which are also known as choppers, multi-purpose vehicles, which can be used both as corn harvesters and forage harvesters, big balers for pressing hay and/or straw into bales and round balers for rolling up and pressing hay and/or straw into round bales.

In the last twenty to twenty-five years the number of cutting blades applied in such machines has increased from 15 to 20 cutting blades per machine to a number of 40 to 45 cutting blades per machine. One of the reasons for applying more cutting blades in such a machine is the increased demand to have the product cut or chopped more finely so that it can be mixed more easily with other fodder. In addition, a more finely cut product is more readily digested by the animals to be fed, whereby a higher conversion can be realized. The cutting blades becoming blunt can result in a less finely cut product and/or unnecessary loading of the machine.

The cutting blades must therefore be sharpened regularly. This sharpening has heretofore taken place with manual sharpening devices arranged on a table on which the cutting blades are manually clamped blade by blade. Once a cutting blade has been clamped, a sharpening mechanism, for instance an arranged, rapidly rotating sharpening disc, sharpens the cutting blade in a path moving along the blade edge. This form of sharpening of cutting blades is however labour-intensive and time-consuming. The sharpening device also generates a great deal of noise and fine dust particles are released during sharpening. This may result in health problems in the form of disorders of both the airways and of the hearing of the user of the sharpening device. In addition, manual sharpening of the cutting blades may result in limited accuracy and reproducibility.

The invention therefore has for its object to provide a cutting blade sharpening device which does not have, or at least partly obviates, the above stated drawbacks while the advantages thereof are at least partially retained. The invention more specifically has for its object to provide a cutting blade sharpening device which is less damaging to health, which is faster, more efficient and/or produces more homogeneously sharpened cutting blades.

At least one of these and/or other objects are achieved with a device suitable for sharpening cutting blades, for instance cutting blades for agricultural machines, comprising: a first receiving cassette for receiving cutting blades for sharpening, a second receiving cassette for receiving sharpened cutting blades, a conveyor with receiving element, a sharpening mechanism, wherein the conveyor is adapted to receive a cutting blade for sharpening from the first cassette, to place the cutting blade for sharpening in a sharpening position in which the cutting blade for sharpening can be sharpened by the sharpening mechanism, and to place the sharpened cutting blade into the second receiving cassette.

Owing to such a configuration the user only has to fill the machine with cutting blades for sharpening, set it and switch it on. The machine then sharpens all the inserted blades one by one without the user having to be present during the sharpening. This person can hereby be given other work and is not subjected to the sharpening noise and/or the released sharpening dust.

The first and/or the second receiving cassette can be interchangeable with each other and/or with other receiving cassettes. Different shapes of cutting blade and types of cutting blade can hereby be placed in simple manner in a receiving cassette specifically equipped therefor without greater structural modifications having to be made to the device.

The conveyor can here comprise a pivotable receiving element, for instance a rotary wing. By applying such a pivotable receiving element the number of moving parts transporting the blades for sharpening and sharpened blades is relatively small. There are hereby fewer components and maintenance and repair of the machine can be relatively simple. In such a configuration it is also possible to hold in stock only a relatively small number of spare parts.

The receiving element of the conveyor can comprise at least one protrusion on a side directed toward the cutting blades, this protrusion being suitable for fixing a blade for sharpening or a sharpened blade in the receiving element.

One cutting blade at a time can be carried to a subsequent position by such a protrusion, wherein the whole configuration requires a relatively simple design. Such a protrusion can optionally also be chamfered on one side so that, during a return movement of the receiving element, it can lift the receiving element slightly as soon as its chamfered side comes up against a blade. The conveyor can hereby move the cutting blades in one direction while in a return movement the conveyor can be lifted by the protrusion over each of the cutting blades situated thereunder.

In a first position the conveyor can be placeable close to the first receiving cassette so that it can take a cutting blade for sharpening out of the first receiving cassette, in a second position can fix a cutting blade and in a third position can be placed close to the second receiving cassette so that the conveyor can place the sharpened cutting blade in the second receiving cassette.

Owing to such a configuration the conveyor can transport one blade for sharpening or a sharpened blade at a time. The conveyor can optionally also be embodied as a carousel with a plurality of receiving positions. The conveyor can hereby perform movements in for instance only one direction.

The first and/or the second receiving cassette can comprise at least one positioning guide suitable for positioning the cutting blades present in the first and/or second receiving cassette.

Owing to such a positioning guide the stacked cutting blades remain in line one above the other so that, when the uppermost cutting blade is received, it can be presented each time in the same position and the same orientation to the conveyor. Jamming of the device and the occurrence of wear can hereby be reduced.

The first and/or the second receiving cassette can comprise a support structure arranged displaceably along the at least one positioning guide, wherein the displaceable support structure is displaceable over discrete distances. This support structure can for instance carry each of the cutting blades over discrete distances into a position such that the conveyor can carry away the uppermost cutting blade each time.

The device can comprise a holder for fixing the cutting blade for sharpening in the sharpening position. Owing to such a holder the cutting blade for sharpening cannot displace during the sharpening, whereby a more uniform sharpening operation can be achieved.

The machine can additionally be provided with an outer housing and/or an extractor. The released sharpening dust can for instance hereby be collected in controlled manner.

The invention also relates to a method for sharpening cutting blades, for instance cutting blades for agricultural machines, using a cutting blade sharpener as described above, comprising the following steps, to be performed in suitable sequence, of: (a) providing a cutting blade sharpening device as described above, (b) placing at least one cutting blade for sharpening in a first receiving cassette, (c) moving the conveyor into a first position close to the first receiving cassette, (d) displacing the first support structure with the cutting blade for sharpening in the direction of the receiving element through a discrete distance substantially corresponding to the thickness of the cutting blade, such that a pin of the receiving element of the conveyor can engage the cutting blade for sharpening, (e) displacing the conveyor with the cutting blade for sharpening to a second position in which the cutting blade for sharpening can be sharpened, (f) holding the cutting blade for sharpening in place using a holder, (g) sharpening the cutting blade for sharpening by means of a sharpening mechanism, (h) moving the conveyor to a third position, wherein in the third position the sharpened cutting blade is received in the second receiving cassette, (I) removing the second support structure with the sharpened cutting blade through a discrete distance substantially corresponding to the thickness of the sharpened cutting blade relative to the receiving element, and (j) displacing the conveyor from the third position to the first position.

Using this method a whole series of cutting blades can be sharpened, wherein a user need only place the cutting blades in the first cassette, set and switch on the machine. No user need be present during the sharpening. The user can hereby be less exposed to dust and noise. This can have a favourable effect on the health of the user.

In the above described method the conveyor can be stopped in the sharpening position during step (e) by means of a movable stop, which is for instance movable by means of a gas cylinder. The conveyor can be stopped in substantially the same position each time by such a stop, whereby the cutting blades for sharpening can be sharpened uniformly.

The above described successive steps can be controlled by a logic circuit, whereby the sharpening can proceed fully automatically. The logic circuit can here comprise for instance a PLC, these being easy to program and optionally adapt to additional functions.

The invention will be further elucidated on the basis of an embodiment shown in the drawing. In the drawing:
figure 1 shows a first perspective view of a cutting blade sharpener according to a first embodiment of the invention,
figure 2 shows a second perspective view of the cutting blade sharpener according to figure 1, and

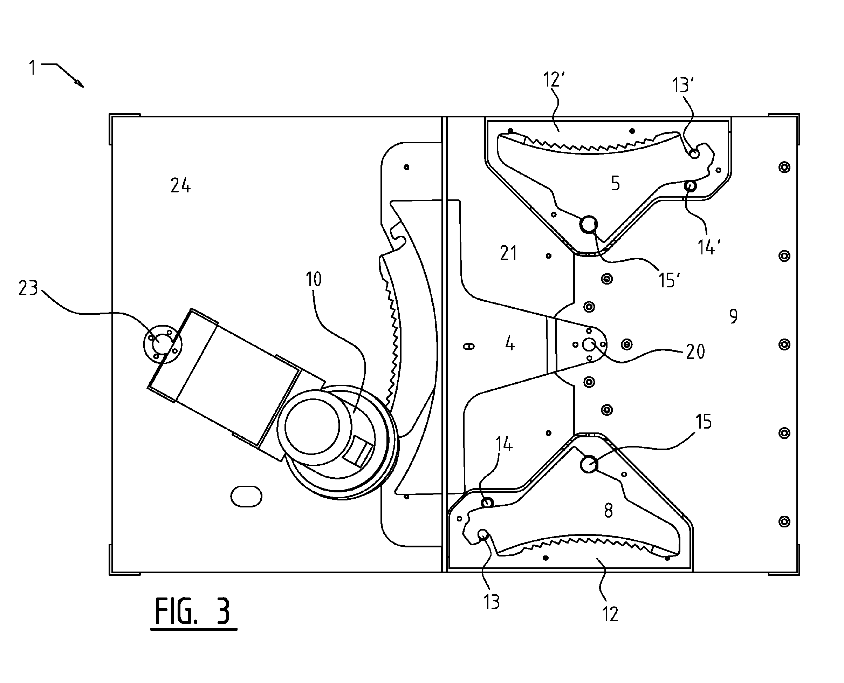

figure 3 shows a top view of the cutting blade sharpener according to figure 1.

It is noted that the drawing is only a schematic representation of a preferred embodiment of the invention. The drawing must in no way be interpreted as being limitative for the invention. The same or corresponding components are designated in the figures with corresponding reference numerals.

The term "cutting blades" used in this specification and/or the claims must be understood to mean, but is by no means limited to, objects with at least one sharp edge which can be sharpened by removing a quantity of material.

The term "sharpening" used in this specification and/or the claims must be understood to mean, but is by no means limited to, the sharpening of an edge or a side of for instance a cutting blade. This sharpening can for instance take place by grinding or sharpening material such that a sharp side or edge results. The sharpening or grinding can take place here by means of for instance a rotating disc, a grinding belt, a reciprocating file, a water jet, a laser, a sandblast, a combination and/or other suitable means. The sharpening can optionally take place and/or be supported by means of spark erosion.

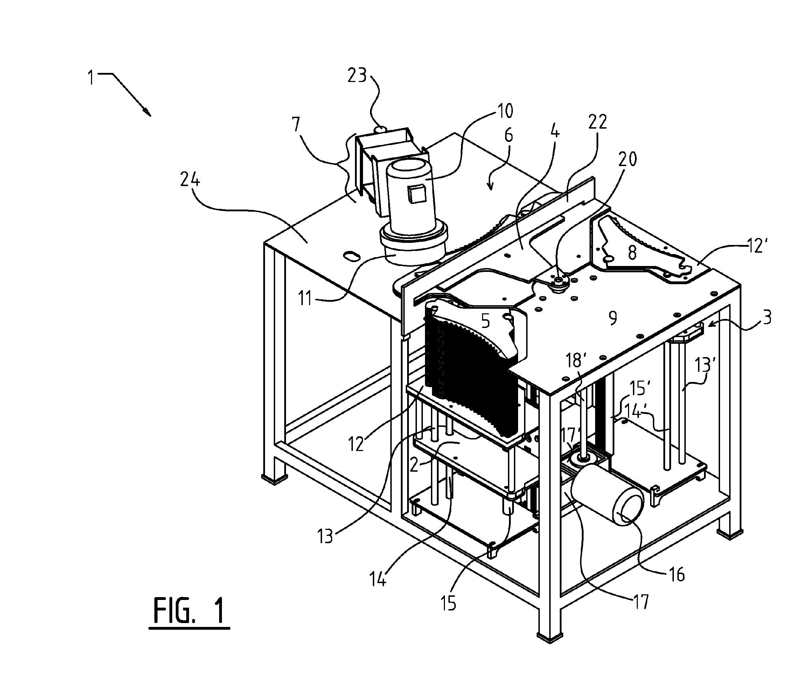

Figure 1 shows a cutting blade sharpening device 1. Cutting blade sharpening device 1 comprises a first receiving cassette 2 and a second receiving cassette 3. Cutting blades 5 for sharpening can be placed in first receiving cassette 2. The sharpened cutting blades 8 can be placed in second receiving cassette 3.

Cutting blade sharpening device 1 also comprises a conveyor 4 arranged pivotally above a first worktop 9. In figure 1 conveyor 4 is situated in a sharpening position 6. Sharpening mechanism 7, comprising a pivotally arranged motor 10, comprises a grinding bowl 11.

First receiving cassette 2 comprises a support structure 12 on which cutting blades 5 for sharpening can rest. Support structure 12 is displaceable along positioning guides 13, 14 and 15, wherein positioning guides 13, 14 and 15 can hold the cutting blades 5 for sharpening in one determined orientation and position.

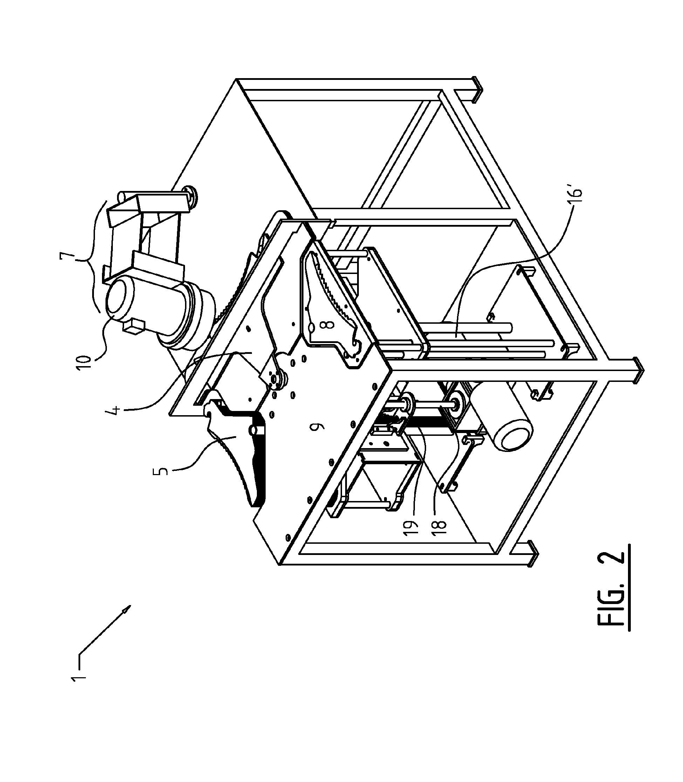

The movement of support structure 12 can be caused by an actuator 16, for instance an electric motor. In figures 1 and 2 actuator 16 is connected via a transmission 17 to a spindle 18. A nut 19 coupled to support structure 12 is arranged round spindle 18. By rotating spindle 18 nut 19 can be displaced in upright direction. Support structure 12 coupled to the nut can hereby also be displaced so that cutting blades 5 for sharpening can be presented to conveyor 4.

Second receiving cassette 3 comprises a support structure 12' on which the sharpened cutting blades 8 can rest. Support structure 12' is displaceable along positioning guides 13', 14' and 15', wherein positioning guides 13', 14' and 15' can hold the sharpened cutting blades 8 in one determined orientation and position.

The movement of support structure 12' can be caused by an actuator 16', for instance an electric motor. In figures 1 and 2 actuator 16' is connected via a transmission 17' to a spindle 18'. A nut coupled to support structure 12' is arranged around spindle 18'. By rotating spindle 18' the nut can be displaced in upright direction. Support structure 12' coupled to the nut can hereby also be displaced so that the sharpened cutting blades 8 can be accepted from conveyor 4.

Conveyor 4 is arranged pivotally above first worktop 9 via a pivot shaft 20 and can be placed in a first position with a receiving element close to cutting blades 5 for sharpening or support structure 12. In this first position of conveyor 4 support structure 12 can be moved upward through substantially the thickness of a cutting blade 5 for sharpening. In this way a cutting blade 5 for sharpening can be presented to the receiving element of conveyor 4. The cutting blade 5 for sharpening presented to conveyor 4 can here be moved so far that a bottom surface of cutting blade 5 for sharpening is situated at substantially the same height as, or slightly higher than, the first worktop 9.

An elevated section 21 can here be arranged in first worktop 9. This elevated section 21 can for instance substantially correspond with the thickness of the cutting blades 5 for sharpening. An advantage here is that during a return movement the conveyor cannot catch behind the uppermost cutting blade 5 for sharpening, since the upper surface of the uppermost cutting blade for sharpening and the upper surface of elevated section 21 are situated at substantially the same height.

Once the uppermost cutting blade 5 for sharpening from receiving cassette 12 is received in the receiving element of conveyor 4, conveyor 4 can pivot to a sharpening position 6. Having arrived in sharpening position 6, conveyor 4 with the cutting blade 5 for sharpening situated in its receiving element can be held in place by means of a holder 22. The cutting blade 5 for sharpening is hereby substantially unable to move in sharpening position 6.

Holder 22 can here comprise a preset lying beam under which conveyor 4 with the cutting blade for sharpening or the sharpened cutting blade can just rotate with a small clearance. A small movement tolerance can be sufficient here to allow the movement of the conveyor, while in the sharpening position the cutting blade cannot perform any movements during sharpening.

In addition, the lying beam of holder 22 can prevent the conveyor moving upward during rotation. For this purpose the conveyor, due to its shape, can be held partially under holder 22 in the three different positions.

During movement the conveyor can be stopped in the sharpening position by a movable stop. A movable stop can here for instance be a pin driven by an air pressure cylinder which can stop the movement of the conveyor in a first position, while in for instance a retracted position of the pin the conveyor can move further to second receiving cassette 3.

Once the cutting blade for sharpening has been placed in the sharpening position, the sharpening mechanism can begin sharpening. Electric motor 10 of sharpening mechanism 7 can here for instance be started, after which sharpening mechanism 7 can pivot above a second worktop 24 by means of a pivot shaft 23, wherein grinding bowl 11 can move, optionally rotatingly, along the cutting blade for sharpening. Pivoting of sharpening mechanism 7 can be effected here by means of an actuator.

Second worktop 24 can be arranged lower than first worktop 9, whereby the grinding bowl can be arranged at a lower position relative to cutting blade 5 for sharpening and relative to first worktop 9. The cutting blade 5 for sharpening can hereby be machined up to its lower edge by grinding bowl 11.

Once sharpening mechanism 7 has moved along the cutting side and/or edge of the now sharpened cutting blade 8', sharpening mechanism 7 can be switched off and conveyor 4 with sharpened cutting blade 8' situated in the receiving element can pivot to a third position, wherein the cutting blade 8' situated in the receiving element is directed toward support structure 12' or a sharpened cutting blade 8 situated on support structure 12'.

Once conveyor 4 has reached this position, support structure 12' can then move downward through a height substantially corresponding to the thickness of a sharpened cutting blade 8.

Sharpened cutting blade 8' is hereby received in receiving cassette 3 and the receiving element of conveyor 4 is left vacant for a subsequent cutting blade for sharpening to be received therein.

The conveyor can now move back to the first position in order to then once again receive a cutting blade for sharpening in the receiving element. The above described procedure can be repeated here until the first receiving cassette contains no further cutting blades for sharpening.

The whole sharpening process can be controlled by a programmable logic computer (PLC). Sensors, for instance approach switches, can be used here to indicate per step when it has been completed in order to thus start for instance the following step.

It is noted that the invention is not limited to the above discussed exemplary embodiment. A hardening and/or a machining operation can thus be performed instead of using a sharpening device. Extra material can also be arranged on the cutting blade using for instance welding electrodes or laser powder-sinter coating. For instance wear and decrease in the amount of the material of the cutting blade can hereby be compensated. A flushing or hardening step can also be incorporated after and/or during the sharpening.

The rotating movements of the conveyor and of the sharpening mechanism can be performed by means of for instance rotary wing motors. Possible other drives can also be applied in addition. The machine can be equipped for this purpose with a compressor.

The sharpening motor of the sharpening mechanism can be supported by means of a parallelogrammic rod system. A gas cylinder can here bring about a movement of the sharpening motor in upright direction. The pressure of the grinding bowl on the cutting blade for sharpening can optionally also be set by means of this gas cylinder.

Such and other variants will be apparent to the skilled person and are deemed to lie within the scope of the invention as stated in the following claims.

## Claims

1. Device suitable for sharpening cutting blades, for instance cutting blades for agricultural machines, comprising:
- a first receiving cassette for receiving cutting blades for sharpening,
- a second receiving cassette for receiving sharpened cutting blades,
- a conveyor with receiving element,
- a sharpening mechanism,
wherein the conveyor is adapted to receive a cutting blade for sharpening from the first cassette, to place the cutting blade for sharpening in a sharpening position in which the cutting blade for sharpening can be sharpened by the sharpening mechanism, and to place the sharpened cutting blade in the second receiving cassette.

2. Device as claimed in claim 1, wherein the first and/or the second receiving cassette are interchangeable with each other and/or with other receiving cassettes.

3. Device as claimed in claim 1 or 2,
wherein the conveyor comprises a pivotable receiving element, for instance a rotary wing.

4. Device as claimed in claim 3, wherein the receiving element of the conveyor comprises at least one protrusion on a side directed toward the cutting blades, this protrusion being suitable for fixing a blade for sharpening or a sharpened blade in the receiving element.

5. Device as claimed in any of the foregoing claims, wherein in a first position the conveyor can be placed close to the first receiving cassette so that it can take a cutting blade for sharpening out of the first receiving cassette, in a second position can fix a cutting blade and in a third position can be placed close to the second receiving cassette so that the conveyor can place the sharpened cutting blade in the second receiving cassette.

6. Device as claimed in any of the foregoing claims, wherein the first and/or the second receiving cassette comprises at least one positioning guide suitable for positioning the cutting blades present in the first and/or second receiving cassette.

7. Device as claimed in claim 5, wherein the first and/or the second receiving cassette comprises a support structure arranged displaceably along the at least one positioning guide.

8. Device as claimed in claim 7, wherein the displaceable support structure is displaceable over discrete distances.

9. Device as claimed in any of the foregoing claims, comprising a holder for fixing the cutting blade for sharpening in the sharpening position.

10. Method for sharpening cutting blades, for instance cutting blades for agricultural machines, using a cutting blade sharpener as claimed in any of the claims 1-9, comprising the following steps, to be performed in suitable sequence, of:
- (a) providing a cutting blade sharpening device according to any of the claims 1-9,
- (b) placing at least one cutting blade for sharpening in a first receiving cassette,
- (c) moving the conveyor into a first position close to the first receiving cassette,
- (d) displacing the first support structure with the cutting blade for sharpening in the direction of the receiving element through a discrete distance substantially corresponding to the thickness of the cutting blade, such that a pin of the receiving element of the conveyor can engage the cutting blade for sharpening,
- (e) displacing the conveyor with the cutting blade for sharpening to a second position in which the cutting blade for sharpening can be sharpened,
- (f) holding the cutting blade for sharpening in place using a holder,
- (g) sharpening the cutting blade for sharpening by means of a sharpening mechanism,
- (h) moving the conveyor to a third position, wherein in the third position the sharpened cutting blade is received in the second receiving cassette,
- (I) removing the second support structure with the sharpened cutting blade through a discrete distance substantially corresponding to the thickness of the sharpened cutting blade relative to the receiving element, and
- (j) displacing the conveyor from the third position to the first position.

11. Method for sharpening cutting blades as claimed in claim 10, wherein the conveyor is stopped in the sharpening position during step (e) by means of a movable stop, which is for instance movable by means of a cylinder with piston.

12. Method for sharpening cutting blades as claimed in claim 10 or 11, wherein the successive steps are controlled by a logic circuit.

13. Method as claimed in claim 12, wherein the logic circuit comprises a PLC.
